(19) Europäisches Patentamt
European Patent Office
Office européen des brevets

(11) **EP 1 427 985 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(51) Int Cl.:
**G01B 11/02** (2006.01)        **G01D 5/36** (2006.01)
**G01D 5/38** (2006.01)

(21) Anmeldenummer: **02774545.4**

(22) Anmeldetag: **02.09.2002**

(86) Internationale Anmeldenummer:
**PCT/EP2002/009767**

(87) Internationale Veröffentlichungsnummer:
**WO 2003/021185 (13.03.2003 Gazette 2003/11)**

(54) **POSITIONSMESSEINRICHTUNG UND VERFAHREN ZUM BETRIEB EINER POSITIONSMESSEINRICHTUNG**

POSITION MEASURING SYSTEM AND METHOD FOR OPERATING SUCH A POSITION MEASURING SYSTEM

DISPOSITIF DE MESURE DE POSITION ET PROCEDE POUR L'EXPLOITATION D'UN DISPOSITIF DE MESURE DE POSITION

(84) Benannte Vertragsstaaten:
**AT BE BG CH CY CZ DE DK EE ES FI FR GB GR IE IT LI LU MC NL PT SE SK TR**

(30) Priorität: **04.09.2001 DE 10143185**

(43) Veröffentlichungstag der Anmeldung:
**16.06.2004 Patentblatt 2004/25**

(73) Patentinhaber: **Dr. Johannes Heidenhain GmbH 83292 Traunreut (DE)**

(72) Erfinder:
• **HOLZAPFEL, Wolfgang**
  **83119 Obing (DE)**
• **SÄNDIG, Karsten**
  **83349 Palling (DE)**

(56) Entgegenhaltungen:
**WO-A-89/05440        US-A- 5 648 658**

**EP 1 427 985 B1**

**Beschreibung**

Die vorliegende Erfindung betrifft eine Positionsmesseinrichtung nach dem Oberbegriff des Anspruches 1. Desweiteren betrifft die vorliegende Erfindung ein Verfahren zum Betrieb einer Positionsmesseinrichtung nach dem Oberbegriff des Anspruches 19.

Bekannte Positionsmesseinrichtungen liefern neben Inkrementalsignalen bezüglich des Relativversatzes zweier zueinander beweglicher Objekte oftmals auch sogenannte Referenzimpulssignale. Über diese Signale kann bei einer definierten Relativposition der zueinander beweglichen Objekte ein exakter Absolutbezug der Positionsmessung hergestellt werden. Zur Erzeugung der Referenzimpulssignale sind auf Seiten des Maßstabes der Positionsmesseinrichtung an ein oder mehreren Stellen Felder mit Referenzmarkierungen angeordnet. Bezüglich der Anordnung der Referenzmarkierungen auf dem Maßstab existieren eine Reihe von bekannten Möglichkeiten.

So ist beispielsweise aus der US 4,263,506 bekannt, die Referenzmarkierungen auf dem Maßstab seitlich benachbart zur Teilungsspur mit der Inkrementalteilung anzuordnen. Problematisch hierbei ist jedoch, dass im Fall einer eventuellen Verdrehung von Maßstab und Abtasteinheit um eine Achse senkrecht zur Maßstab- oder Abtastebene die exakte Zuordnung des Referenzimpulssignales zu einer bestimmten Periode der Inkrementalsignale in der Regel nicht mehr gewährleistet ist.

Daneben ist es auch möglich, die Referenzmarkierungen unmittelbar in die Spur mit der Inkrementalteilung zu integrieren, wie dies etwa in der US 3,985,448 vorgeschlagen wird und das Referenzimpulssignal dann unmittelbar aus der Inkrementalteilung abzuleiten. Eine derartige Anordnung bietet insbesondere Vorteile hinsichtlich der Zuordnung des Referenzimpulssignales zu den Inkrementalsignalen, da auch im Fall der oben erwähnten Verdrehung von Maßstab und Abtasteinheit stets die korrekte Zuordnung gewährleistet bleibt. Als Referenzmarkierung können an der gewünschten Referenzposition auf dem Maßstabes in der Inkrementalteilung z.B. ein oder mehrere weggelassene Stege oder Striche der Inkrementalteilung dienen, d.h. die Spur mit der Inkrementalteilung weist an ein oder mehreren definierten Stellen eine Unstetigkeit bzgl. einer optischen Eigenschaft auf, um das Referenzimpulssignal zu erzeugen.

Weitere Varianten bezüglich der Integration von Referenzmarkierungen in die Spur mit der Inkrementalteilung sind ferner aus der DE 35 36 466 A1 oder aus der US 4,866,269 bekannt. In diesen Druckschriften wird vorgeschlagen, in der Inkrementalteilung die Referenzmarkierungen als aperiodische Strich- oder Stegfolgen auszubilden oder aber Bereiche mit veränderten optischen Eigenschaften als Referenzmarkierungen zu nutzen, die sich von der restlichen Inkrementalteilung unterscheiden.

Als problematisch bei der Integration von Referenzmarkierungen in die Inkrementalteilung erweist sich jedoch grundsätzlich, dass dadurch auch das periodische Inkrementalsignal an dieser Stelle gestört wird, da man gezwungen ist eine hinreichende Detektionssicherheit für das Referenzimpulssignal sicherzustellen. Insbesondere im Fall einer gewünschten hohen Interpolation des Inkrementalsignales, die wiederum ein möglichst gute Signalqualität desselben voraussetzt, ergeben sich Schwierigkeiten, wenn das Inkrementalsignal an der Referenzposition deutlich von einer idealen Signalform abweicht.

Desweiteren ist aus der DE 41 11 873 C2 bekannt, aus einer Spur ein Referenzimpulsisgnal zu erzeugen, welche lediglich zur Erzeugung einer Bereichsinformation auf dem Maßstab angeordnet ist, d.h. zur Identifikation, auf welcher Seite einer Maßstab-Referenzposition sich eine Abtasteinheit gerade befindet. Am Übergang zwischen zwei unterschiedlichen Bereichen kann aus den entsprechenden Bereichssignalen auch ein Referenzimpulssignal erzeugt werden. Problematisch hieran ist jedoch die korrekte Detektion eines Referenzimpulssignales an dieser Stelle.

Eine erste Aufgabe der vorliegenden Erfindung ist es daher, eine Positionsmesseinrichtung zu schaffen, die eine Erzeugung eines Referenzimpulssignales aus einer Spur mit einer Inkrementalteilung ermöglicht. Hierbei soll die Inkrementalsignal-Erzeugung möglichst wenig gestört werden.

Desweiteren ist eine zweite Aufgabe der vorliegenden Erfindung, ein Verfahren zum Betrieb einer Positionsmesseinrichtung anzugeben, das insbesondere zur korrekten Erzeugung eines Referenzimpulssignales aus einer Spur mit Bereichssignalen geeignet ist.

Die erste Aufgabe wird gelöst durch eine Positionsmesseinrichtung mit den Merkmalen im kennzeichnenden Teil des Anspruches 1.

Vorteilhafte Ausführungsformen der erfindungsgemäßen Positionsmesseinrichtung ergeben sich aus den Maßnahmen, die in den von Anspruch 1 abhängigen Ansprüchen aufgeführt sind.

Die zweite Aufgabe wird gelöst durch ein Verfahren mit den Merkmalen im kennzeichnenden Teil des Anspruches 19.

Vorteilhafte Ausführungsformen des erfindungsgemäßen Verfahrens zum Betrieb einer Positionsmesseinrichtung ergeben sich aus den Maßnahmen, die in den von Anspruch 19 abhängigen Ansprüchen aufgeführt sind.

Erfindungsgemäß weisen in der Positionsmesseinrichtung nunmehr unterschiedliche Abschnitte der Inkrementalteilung entlang der Messstrecke unterschiedliche periodische Transversal-Substrukturen auf, die eine Ablenkung der auftreffenden Strahlenbündel in verschiedene Raumrichtungen bewirken. Hierbei sind jedem Abschnitt unterschiedliche Transversal-Substrukturen mit unterschiedlichen Ablenkwirkungen zugeordnet. Im Übergangsbereich zwischen benachbarten Abschnitten liegt eine Unstetigkeit bzgl. der optischen Ablenkwirkung der Transversal-Substrukturen vor, die zur Erzeugung des Referenzimpulssignales an dieser Stelle, d.h. der Referenzposition, genutzt wird. Hierzu sind auf Seiten der Abtasteinheit mindestens zwei Referenzimpuls-Detektorelemente in den verschiedenen Raumrichtungen angeordnet. An den Referenzimpuls-Detektorelementen liegen Referenzimpuls-Teilsignale an, aus deren Verarbeitung das gewünschte Referenzimpulssignal resultiert.

Durch diese Art der Referenzimpulssignal-Erzeugung ist gewährleistet, dass die periodische Inkrementalteilung auch an der Referenzposition nicht in ihrer Periodizität gestört wird und demzufolge auch das resultierende Inkrementalsignal von der Erzeugung des Referenzimpulssignales nicht gestört wird. Insbesondere erleidet auch das Inkrementalsignal aufgrund der erfindungsgemäßen Erzeugung des Referenzimpulssignales keine unerwünschten Intensitätseinbußen.

Neben den Vorteilen eines aus der Inkrementalteilung abgeleiteten Referenzimpulssignales hinsichtlich geringer Baugröße der Positionsmesseinrichtung und unkritischer Montage ergeben sich aufgrund der erfindungsgemäßen Maßnahmen weitere Vorteile.

So kann nunmehr ohne weitere Zusatzmaßnahmen aus den Referenzimpuls-Teilsignalen auch eine Information diesbezüglich erzeugt werden, auf welcher Seite der Referenzmarkierung bzw. in welchem Bereich sich die Abtasteinheit gerade befindet. Die Referenzimpuls-Teilsignale können demzufolge auch als sog. Bereichssignale ausgewertet werden. Ferner kann durch die Art und Weise der Verarbeitung der Referenzimpuls-Teilsignale eine gewünschte Breite des resultierenden rechteckförmigen Referenzimpulssignales definiert eingestellt und auf die Signalperiode des Inkrementalsignales abgestimmt werden.

Im Fall der Erzeugung mindestens eines ersten und eines zweiten Bereichssignales und aus dem erfolgenden Vergleich zwischen dem ersten Bereichssignal oder davon abgeleiteten weiteren Bereichssignalen mit dem zweiten Bereichssignal oder hiervon abgeleiteten weiteren Bereichssignalen ist hierbei ein Referenzimpulssignal erzeugbar.

Selbstverständlich lassen sich die erfindungsgemäßen Maßnahmen sowohl in rotatorischen als auch in linearen Positionsmesseinrichtungen einsetzen.

Desweiteren lassen sich sowohl Auflicht-Positionsmesseinrichtungen als auch Durchlicht-Positionsmesseinrichtungen erfindungsgemäß ausgestalten.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt

Figur 1          eine seitliche Ansicht eines Ausführungsbeispieles der erfindungsgemäßen Positionsmesseinrichtung;

Figur 2          eine schematische räumliche Darstellung des Abtaststrahlenganges im Ausführungsbeispiel der Figur 1;

Figur 3a und 3b    jeweils eine Draufsicht auf den Maßstab aus Figur 1;

Figur 4a - 4c    verschiedene Signaldiagramme, anhand der eine erste Variante der erfindungsgemäßen Erzeugung des Referenzimpulssignales erläutert wird;

Figur 5          eine Blockschaltbild-Darstellung zur Erläuterung der ersten Variante zur Erzeugung des Referenzimpulssignales;

Figur 6          eine schematische räumliche Darstellung des Abtaststrahlenganges eines weiteren Ausführungsbeispieles zur Erläuterung einer zweiten Variante zur Erzeugung des Referenzimpulssignales;

Figur 7          eine Blockschaltbild-Darstellung zur Erläuterung der zweiten Variante zur Erzeugung des Referenzimpulssignales;

Figur 8a - 8c    verschiedene Signaldiagramme, anhand der eine zweite Variante der erfindungsgemäßen Erzeugung des Referenzimpulssignales erläutert wird.

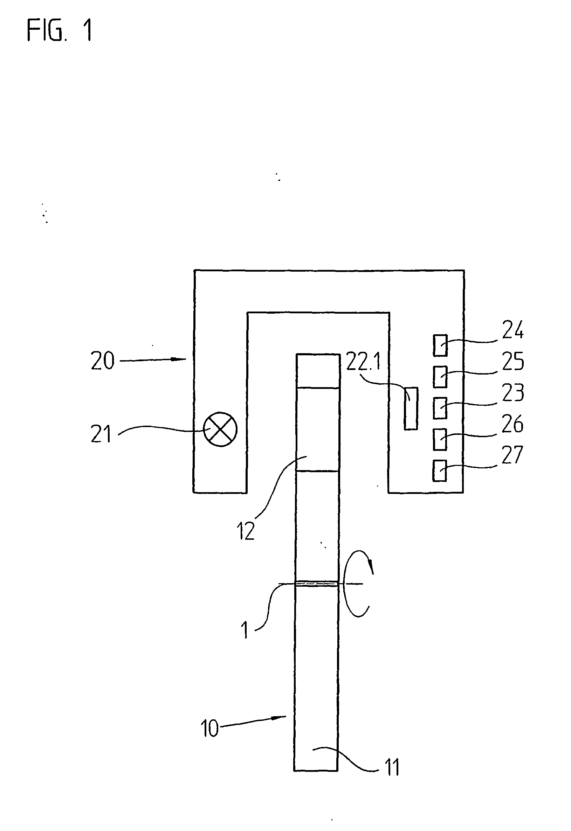

In Figur 1 ist in schematisierter Form ein Ausführungsbeispiel der erfindungsgemäßen Positionsmesseinrichtung in einer Schnittansicht dargestellt. Die gezeigte Variante der Positionsmesseinrichtung dient hierbei zur Erfassung rotatorischer Bewegungen zweier zueinander beweglicher Objekte um die Drehachse 1 und umfasst einen Maßstab 10 sowie eine Abtasteinheit 20, die jeweils mit einem der beiden Objekte verbunden sind. Die Messrichtung x, in der die beiden Objekte relativ zueinander beweglich sind, ist im vorliegenden Fall rotationssymetrisch zur Drehachse 1 orientiert.

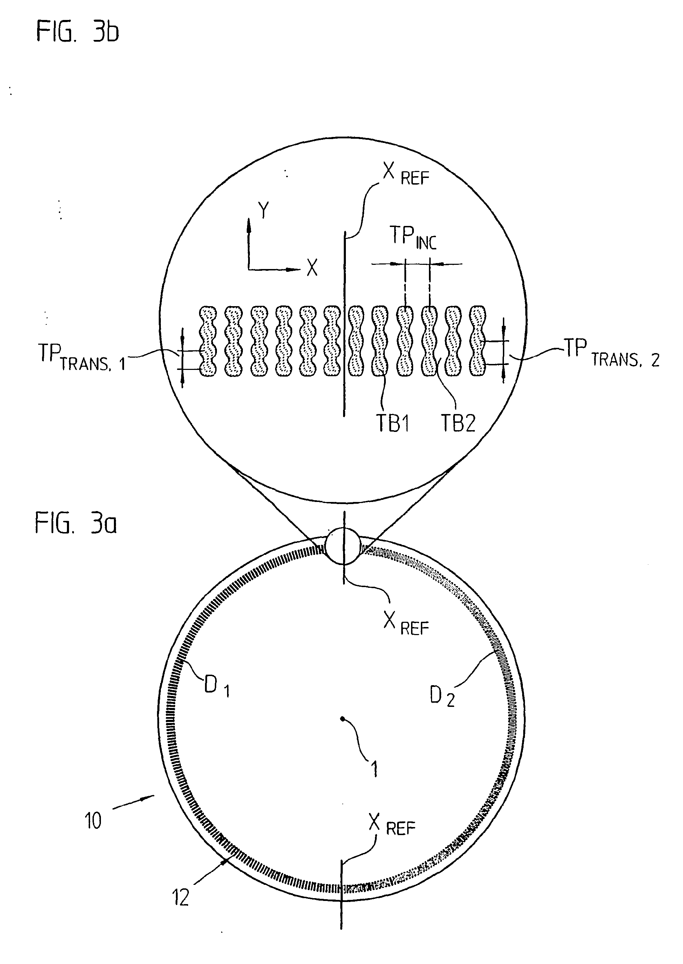

Der Maßstab 10 ist als Teilscheibe ausgebildet, die aus einem scheibenförmigen Trägerelement 11 besteht, auf der eine Spur 12 mit einer Inkrementalteilung kreisförmig in Umfangsrichtung angeordnet ist. Die Inkrementalteilung, die in Fig. 1 nicht im Detail erkannbar ist, besteht aus einer in Messrichtung x, periodisch mit der Inkrementalteilungsperiode $TP_{INC}$ angeordneten Abfolge von Teilbereichen mit unterschiedlichen optischen Eigenschaften. Die Teilbereiche haben hierbei eine Längsausdehnung in einer Richtung y, die senkrecht zur Messrichtung x orientiert ist. In Bezug auf die konkrete Ausbildung der Inkrementalteilung sei auf die nachfolgende Beschreibung der Figuren 3a und 3b verwiesen.

Im vorliegenden Beispiel ist die Inkrementalteilung als Durchlicht-Phasenteilung ausgebildet, d.h. die aufeinanderfolgenden Teilbereiche weisen jeweils eine unterschiedlich phasenschiebende optische Wirkung auf die durchtretenden Strahlenbündel auf; das Trägerelement 11 besteht aus Glas. Auf Seiten der Abtasteinheit 20 ist eine Lichtquelle 21 angeordnet; desweiteren umfasst die Abtasteinheit 20 Abtastteilungen 22.1, 22.2 sowie mehrere Detektorelemente 23 - 27, die zur Erzeugung unterschiedlicher Abtastsignale dienen. Mit dem Bezugszeichen 23 wird hierbei ein lediglich schematisiert angedeutetes Inkrementalsignal-Detektorelement bezeichnet, das zur Erfassung der periodischen Inkrementalsignale INC dient. Das Inkrementalsignal-Detektorelement 23 kann in bekannter Art und Weise als sog. strukturierte Detektoranordnung ausgebildet sein oder aber als Anordnung mit mehreren einzelnen Photoelementen. Mit Hilfe des Inkrementalsignal-Detektorelementes 23 werden in bekannter Art und Weise vier um jeweils 90° bzw. drei um je 120° phasenverschobene Inkrementalsignale erzeugt, die wiederum zu zwei um 90° phasenverschobenen Inkremental-Ausgangssignalen verschaltet werden. Nachfolgend sei der Einfachheit halber jedoch lediglich von periodischen Inkrementalsignalen INC die Rede.

Mit den Bezugszeichen 24, 25, 26, 27 seien die Referenzimpuls-Detektorelemente bezeichnet, an denen meh-rere Referenzimpuls-Teilsignale $REF_1$ - $REF_4$ anliegen und aus deren Verarbeitung letztlich das Referenzimpulssignal REF erzeugt wird, was nachfolgend noch im Detail erläutert wird. Als Referenzimpuls-Detektorelemente 24 - 27 kommen bekannte Photoelemente in Betracht.

Die von der Positionsmesseinrichtung erzeugten Inkrementalsignale INC und Referenzimpulssignale REF werden schließlich einer - nicht dargestellten - nachgeordneten Auswerteeinheit, z.B. einer numerischen Werkzeugmaschinensteuerung, zur Weiterverarbeitung zur Verfügung gestellt.

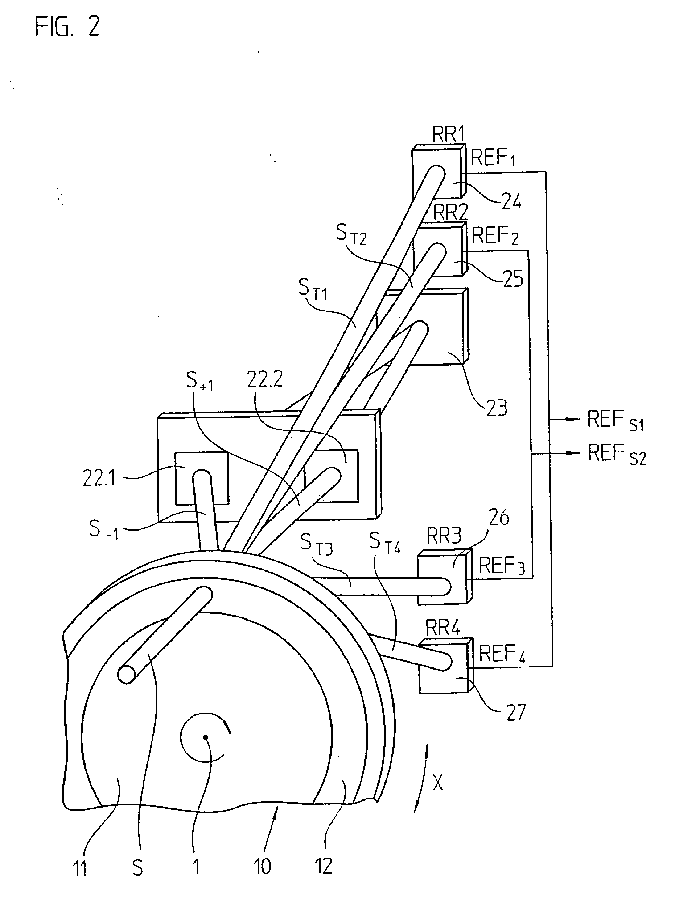

Zur detaillierten Erläuterung der erfindungsgemäßen Erzeugung des Referenzimpulssignales sei nunmehr auf die Beschreibung der folgenden Figuren verwiesen. Figur 2 zeigt hierbei eine perspektivische Schemadarstellung der verschiedenen Abtaststrahlengänge in der erfindungsgemäßen Positionsmesseinrichtung.

Das von der - in Figur 2 nicht dargestellten - Lichtquelle kommende Strahlenbündel S trifft auf dem als Teilscheibe ausgebildeten Maßstab 10 auf die Spur 12 mit der Inkrementalteilung. Zu erwähnen ist an dieser Stelle, dass die Beleuchtung der Inkrementalteilung vorzugsweise mit einem kollimierten Strahlenbündel S erfolgt, welches lediglich einen kleinen Durchmesser besitzt. Die Inkrementalteilung ist in Figur 2 nicht im Detail dargestellt; diesbezüglich sei auf die nachfolgenden Figuren 3a und 3b verwiesen.

Zur Erzeugung der Inkrementalsignale INC wird das auftreffende Strahlenbündel S durch Beugung an der Inkrementalteilung in zwei Teilstrahlenbündel $S_{+1}$ und $S_{-1}$ aufgespalten, die sich in zwei unterschiedlichen Raumrichtungen ausbreiten. Auf Seiten der Abtasteinheit treffen die beiden Teilstrahlenbündel $S_{+1}$ und $S_{-1}$ auf jeweils eine Ab-tastteilung 22.1, 22.2. Von den Abtastteilungen 22.1, 22.2 werden die Teilstrahlenbündel $S_{+1}$ und $S_{-1}$ ebenfalls wieder durch Beugung abgelenkt und in einer Detektionsebene, in der der das Inkrementalsignal-Detektorelement 23 angeordnet ist, zur Interferenz gebracht. Am Inkrementalsignal-Detektorelement 23 liegt im Fall der Relativbewegung von Maßstab und Abtasteinheit, d.h. im Fall der Rotation um die Drehachse 1, ein periodisch moduliertes Inkrementalsignal INC an, welches in bekannter Art und Weise weiterverarbeitet werden kann.

Neben periodischen Inkrementalsignalen INC lässt sich durch die erfindungsgemäßen Maßnahmen desweiteren auch an mindestens einer Stelle bzw. Referenzposition $x_{REF}$ entlang der Messstrecke d ein Referenzimpulssignal REF erzeugen. Mit Hilfe des Referenzimpulssignales REF kann der Absolutbezug während der Messung hergestellt werden, auf den dann die nachfolgende Inkrementalmessung bezogen wird.

Zu diesem Zweck ist eine bestimmte Ausbildung der Inkrementalteilung vorgesehen, um durch eine Unstetigkeit bzgl. einer optischen Eigenschaft an mindestens einer Stelle bzw. Referenzposition ein Referenzimpulssignal REF zu erzeugen. Zur weiteren Erläuterung der vorliegenden Erfindung sei an dieser Strelle auch auf die Figuren 3a und 3b verwiesen, die eine Draufsicht auf den Maßstab 10 bzw. eine Ausschnittsvergrößerung desselben an der Referenzposition $x_{REF}$ zeigen.

Grundsätzlich besteht die Inkrementalteilung in der erfindungsgemäßen Positionsmesseinrichtung aus periodisch mit der Inkremental-Teilungsperiode $TP_{INC}$ in Messrichtung x angeordneten Teilbereichen TB1, TB2 mit unterschiedlichen optischen Eigenschaften. Die Teilbereiche TB1, TB2 besitzen hierbei eine Längsausdehnung in einer Richtung y, die senkrecht zur Messrichtung x orientiert ist.

Im vorliegenden Beispiel weist die Inkrementalteilung in einem ersten Abschnitt $D_1$ der Messstrecke desweiteren eine erste Transversal-Substruktur auf, die darauf auftreffende Strahlenbündel in mindestens eine erste Raumrichtung ablenkt. Beim dargestellten Ausführungsbeispiel in den Figuren 2, 3a und 3b erstreckt sich der erste Abschnitt $D_1$ über das linke 180°-Kreissegment der Teilscheibe bzw. Inkrementalteilung. In einem zweiten Abschnitt $D_2$, der an den ersten

Abschnitt $D_1$ angrenzt, weist die Inkrementalteilung eine zweite Transversal-Substruktur auf, die auftreffende Strahlenbündel in mindestens eine zweite Raumrichtung ablenkt. Die zweite Raumrichtung ist von der ersten Raumrichtung verschieden. Im dargestellten Beispiel stellt demzufolge das rechte 180°-Kreissegment der Inkrementalteilung den zweiten Abschnitt $D_2$ der Messstrecke dar. Zwischen dem ersten und dem zweiten Abschnitt $D_1$ und $D_2$ liegt im Übergangsbereich somit eine Unstetigkeit bzgl. der optischen Ablenkwirkung der jeweiligen Transversal-Substrukturen der Inkrementalteilung vor, die letztlich zur Erzeugung eines Referenzimpulssignales REF an dieser Stelle ausgenutzt wird.

Die Transversal-Substrukturen in der Inkrementalteilung sind jeweils als periodische Strukturen mit einer definierten Ablenk-Teilungsperiode $TP_{TRANS,1}$, $TP_{TRANS,2}$ entlang der Richtung y der Längsausdehnung der Teilbereiche TB1, TB2 ausgebildet, wie insbesondere in Figur 3b erkennbar ist. Die erste Transversal-Substruktur im ersten Abschnitt D1 besitzt hierbei eine erste Ablenk-Teilungsperiode $TP_{TRANS,1}$; die zweite Transversal-Substruktur im zweiten Abschnitt besitzt eine zweite Ablenk-Teilungsperiode $TP_{TRANS,2}$, die sich von der ersten Ablenk-Teilungsperiode $TP_{TRANS,1}$ unterscheidet.

Wie aus der Darstellung in Figur 2 ersichtlich ist, bewirkt die Transversal-Substruktur im ersten Abschnitt $D_1$ der Messstrecke eine Ablenkung der auftreffenden Strahlenündel S in eine erste Raumrichtung RR1. Die in die erste Raumrichtung RR1 abgelenkten Strahlenbündel seien mit dem Bezugszeichen $ST_1$ bezeichnet. Die Transversal-Substruktur im zweiten Abschnitt $D_2$ der Messstrecke bewirkt eine Ablenkung der auftreffenden Strahlenündel S in eine zweite Raumrichtung RR2. Die in die zweite Raumrichtung RR2 abgelenkten Strahlenbündel seien mit dem Bezugszeichen $ST_2$ bezeichnet. In Figur 2 sind zur Veranschaulichung die in die beiden Raumrichtungen RR1, RR2 abgelenkten Strahlenbündel $ST_1$, $ST_2$ dargestellt, was in der Praxis lediglich im Übergangsbereich zwischen den beiden Abschnitten $D_1$ und $D_2$ auftritt.

In den beiden Raumrichtungen RR1 und RR2 sind jeweils Referenzimpuls-Detektorelemente 24, 25 angeordnet, die die in diese Raumrichtungen RR1, RR2 abgelenkten Strahlenbündel detektieren und an denen Referenzimpuls-Teilsignale $REF_1$, $REF_2$ anliegen, aus deren Verarbeitung sich das Referenzimpulssignal REF grundsätzlich erzeugen lässt.

Nachfolgend sei das zugrundeliegende Prinzip der Erzeugung des Referenzimpulssignales REF an der Referenzposition $x_{REF}$ im vorliegenden Beispiel erläutert.

Solange das von der Lichtquelle kommende Strahlenbündel S ausschließlich den ersten Abschnitt $D_1$ der Inkrementalteilung abtastet bzw. durchläuft, erfolgt durch die Transversal-Substruktur in diesem Abschnitt lediglich eine Ablenkung in die erste Raumrichtung RR1, d.h. es resultiert das Strahlenbündel $ST_1$, welches das erste Referenzimpuls-Detektorelement 24 beaufschlagt. Nur das erste Referenzimpuls-Detektorelement 24 registriert in dieser Mess-Phase eine einfallende Strahlungsintensität und damit ein am Ausgang anliegendes erstes Referenzimpuls-Teilsignal $REF_1$. Im Fall der Abtastung des zweiten Abschnittes $D_2$ der Inkrementalteilung liegen genau umgekehrte Verhältnisse vor, d.h. lediglich das zweite Referenzimpuls-Detektorelement 25 in der zweiten Raumrichtung RR2 registriert die einfallende Strahlungsintensität des Strahlenbündels $ST_2$ bzw. an dessen Ausgang liegt dann das zweite Referenzimpuls-Teilsignal $REF_2$ an. Im Übergangsbereich zwischen den beiden Abschnitten $D_1$ und $D_2$, respektive an der Referenzposition $x_{REF}$, liegt somit ein charakteristischer Signalverlauf bzgl. der beiden Referenzimpuls-Teilsignale $REF_1$, $REF_2$ vor, der zur erfindungsgemäßen Erzeugung eines Referenzimpulssignales REF ausgenutzt werden kann.

Im Beispiel der Figuren 3a und 3b mit den beiden Abschnitten $D_1$, $D_2$ der Messtrecke, die sich jeweils über die 180°-Kreissegemente erstrecken, lässt sich selbstverständlich im zweiten Übergangsbereich, der dann gegenüberliegend zum ersten Übergangsbereich angeordnet ist, auf die gleiche Art und Weise ein Referenzimpulssignal REF erzeugen.

Darüberhinaus kann selbstverständlich auch vorgesehen werden, die jeweilige Messstrecke in noch mehr Abschnitte zu zerlegen und an den Übergangsbereichen zwischen den verschiedenen Abschnitten jeweils Referenzimpulssignale zu erzeugen.

Die im vorliegenden Beispiel verwendeten, ablenkenden Transversal-Substrukturen der Inkrementalteilung sind als beugende Strukturen ausgebildet und bewirken jeweils nicht nur eine Ablenkung in die erste oder zweite Raumrichtung RR1, RR2. Es erfolgt im ersten Abschnitt $D_1$ neben der Ablenkung des Strahlenbündels $S_{T1}$ in die erste Raumrichtung desweiteren noch eine Ablenkung des Strahlenbündels $S_{T4}$ in eine vierte Raumrichtung RR4, in der ebenfalls ein Referenzimpulssignal-Detektorelement 27 angeordnet ist. Analog hierzu resultiert im zweiten Abschnitt $D_2$ neben der Ablenkung des Strahlenbündels $S_{T2}$ in die zweite Raumrichtung RR2 noch eine Ablenkung eines Strahlenbündels $S_{T3}$ in eine dritte Raumrichtung RR3, in der ebenfalls ein Referenzimpulssignal-Detektorelement 26 angeordnet ist. Die erste und vierte Raumrichtung RR1, RR4 sowie die zweite und dritte Raumrichtung RR2, RR3 entsprechen somit jeweils den +1. und -1. Beugungsordnungen, in die durch die jeweiligen Transversal-Substrukturen der beiden Abschnitte $D_1$, $D_2$ eine entsprechende Ablenkung erfolgt. Zur weiteren Signalverarbeitung werden die ersten und vierten Referenzimpuls-Detektorelemente 24, 27 sowie die zweiten und dritten Referenzimpuls-Detektorelemente 25, 26 zusammengeschaltet.

Wie aus Figur 2 ersichtlich ist, wird durch die verschiedenen Raumrichtungen RR1 - RR4, in die eine Ablenkung der Strahlenbündel erfolgt, eine Ebene aufgespannt, die senkrecht zur Messrichtung x und parallel zur Richtung der Längsausdehnung y der verschiedenen Teilbereiche TB1, TB2 der Inkrementalteilung orientiert ist.

Die Inkrementalteilung ist im beschriebenen Beispiel als Durchlichtteilung bzw. Phasengitter ausgebildet. Die in Figur 3b erkennbaren, periodisch mit der Inkrementalteilungsperiode $TP_{INC}$ angeordneten Teilbereiche TB1 und TB2 üben demzufolge jeweils eine unterschiedliche Wirkung auf die transmittierten Strahlenbündel auf.

An dieser Stelle sei darauf hingewiesen, dass im Rahmen der vorliegenden Erfindung selbstverständlich alternativ auch Amplitudengitter bzw. -strukturen verwendet werden können. Ebenso ist es selbstverständlich möglich, alternativ ein Auflichtsystem erfindungsgemäß zu realisieren.

Die Transversal-Substruktur der Inkremental-Teilung wird durch eine entsprechende Ausgestaltung der Teilbereiche TB1, TB2 gebildet. Vorzugsweise weisen diese - wie in Figur 3b erkennbar - periodische, sinusförmige Konturbegrenzungen in Richtung ihrer Längsausdehnung auf, d.h. in y-Richtung. Die Periodizität der idealerweise sinusförmigen Konturbegrenzungen entspricht den jeweiligen transversalen Ablenk-Teilungsperioden $TP_{TRANS,1}$, $TP_{TRANS,2}$. Aufgrund dieser Transversal-Substruktur resultiert neben der Ablenkung bzw. Aufspaltung der zur Inkrementalsignalerzeugung verwendeten Strahlenbündel in Messrichtung x auch die gewünschte Transversalablenkung von Strahlenbündeln zur Erzeugung des Referenzimpulssignales REF. Als besonderer Vorteil einer sinusförmigen Konturbegrenzung ist anzuführen, dass darüber sichergestellt wird, dass die Intensität des Inkrementalsignales durch die Erzeugung des Referenzimpulssignales nur geringfügig beeinträchtigt wird. Der Grund hierfür ist die geringe Feldstärke der +/- 1. longitudinalen Beugungsordnungen an den Orten der transversalen Gitterstrukturen. Die Ausdehnung der sinusförmigen Konturbegrenzungen in Messrichtung x, d.h. die Modulationsamplitude der Sinusfunktion bestimmt das Aufteilungsverhältnis der Lichtintensitäten für die herangezogenen Teilstrahlenbündel der Referenzmarken- und der Inkrementalsignalabtastung. Dieses Aufteilungsverhältnis wird durch die Wahl der Modulationsperiode der Sinusfunktion wie gewünscht eingestellt. Zu beachten ist hierbei ferner, dass sich das derart eingestellte Aufteilungsverhältnis in den verschiedenen Teilbereichen TB1 und TB2 möglichst nicht unterscheidet. Neben der im Beispiel der Figur 3b dargestellten Ausgestaltung einer geeigneten Transversal-Substruktur in der Inkrementalteilung sind desweiteren auch noch alternative Varianten im Rahmen der vorliegenden Erfindung einsetzbar.

So könnte z.B. auch eine periodische Transversal-Substruktur eingesetzt werden, bei der die Teilbereiche der Inkrementalteilung dreieckförmige Konturbegrenzungen entlang der y-Richtung aufweisen.

Ferner könnte die Modulationsamplitude der Konturbegrenzung so groß gewählt werden, dass sich in Messrichtung benachbarte Transversal-Substrukturen berühren und derart ein Kreuzgitter mit rautenförmigen Strukturen resultiert.

Desweiteren könnten in den jeweiligen Teilbereichen der Inkrementalteilung auch Zylinderlinsen als transversal zur Messrichtung x ablenkende Substrukturen eingesetzt werden. Derartige Zylinderlinsen können auch zur Fokussierung der transversal abgelenkten Beugungsordnungen auf kleine Detektorelemente eingesetzt werden. Die für die Inkrementalsignalerzeugung genutzten nullten Beugungsordnungen werden hierbei nicht fokussiert bzw. defokussiert.

In einem möglichen Ausführungsform der vorliegenden Erfindung wird die Inkrementalteilungsperiode $TP_{INC}$ = 4μm und die beiden transversalen Ablenk-Teilungsperioden $TP_{TRANS,1}$ = 3.5μm, $TP_{TRANS,2}$ = 4.5μm gewählt. Selbstverständlich können diese Parameter auch anderweitig gewählt und an die jeweilige Abtastkonfiguration angepasst werden.

In weiteren alternativen Ausführungsformen zum erläuterten Beispiel kann desweiteren vorgesehen werden, entlang der jeweiligen Messstrecke noch an mehr als zwei Referenzpositionen Referenzimpulssignale zu erzeugen. Auch die Erzeugung sog. abstandscodierter Referenzmarken ist möglich usw..

Ferner kann auch vorgesehen werden, mehr als lediglich zwei unterschiedlich ablenkende Transversal-Substrukturen einzusetzen. So könnte etwa insbesondere im Fall mehrerer erzeugter Referenzimpulssignale entlang der Messstrecke derart auch eine eindeutige Codierung bzw. Identifikation der jeweiligen Referenzimpulssignale erfolgen. Jeder Referenzposition wäre in diesem Fall ein bestimmter Übergang zwischen unterschiedlich ablenkenden Transversal-Substrukturen eindeutig zugeordnet etc..

Schließlich sei an dieser Stelle erwähnt, dass es im vorliegenden Ausführungsbeispiel auch möglich ist, stets eine Information diesbezüglich zu erzeugen, die angibt, auf welcher Seite einer Referenzposition sich die Abtasteinheit gerade befindet bzw. in welchem Bereich der Messstrecke sich die Abtasteinheit gerade befindet. Dies kann durch das Auslesen der jeweiligen Referenzimpulssignal-Detektorelemente 24, 25, 26, 27 erfolgen. So ist etwa offensichtlich, dass im oben erläuterten Beispiel im Fall eines aussschließlich detektierten ersten Referenzimpuls-Teilsignales $REF_1$ sich die Abtasteinheit im ersten Abschnitt $D_1$ befindet, analog hierzu befindet sich die Abtasteinheit im Fall eines ausschließlich detektierten zweiten Referenzimpuls-Teilsignales REF im zweiten Abschnitt $D_2$ usw.. Die Referenzimpuls-Teilsignale $REF_1$, $REF_2$ können demzufolge auch als sog. Bereichssignale ausgewertet werden.

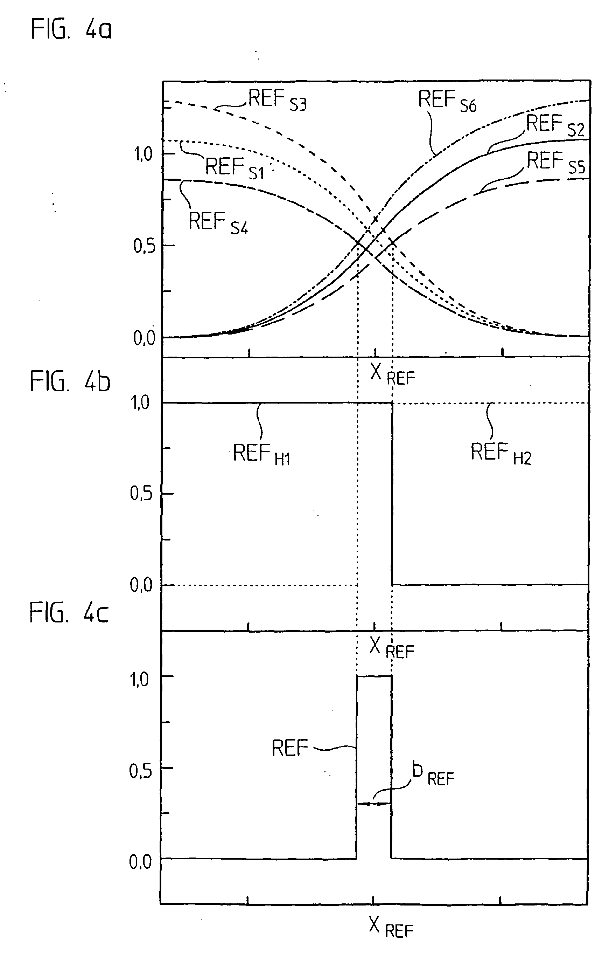

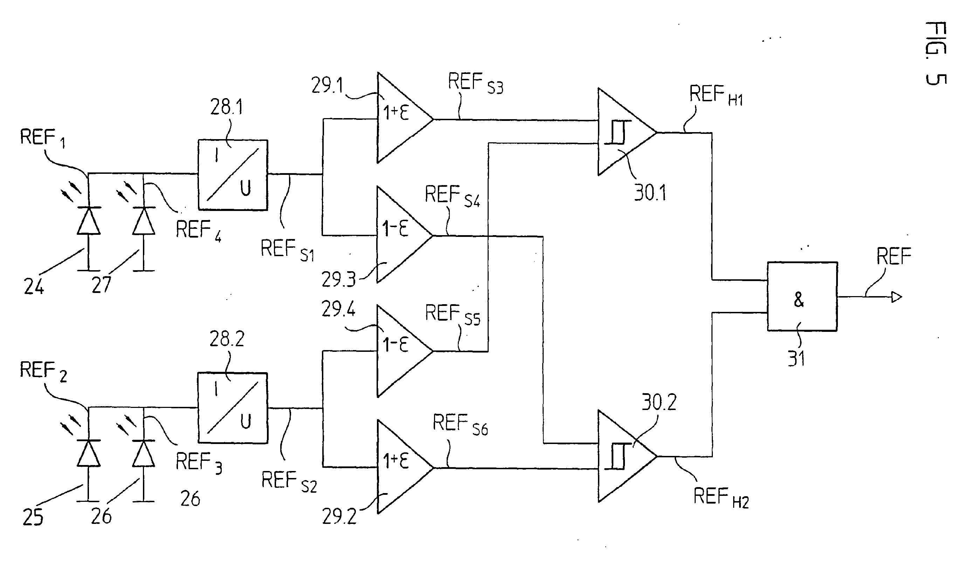

Anhand der Figuren 4a - 4c und 5 sei an einer ersten Variante anschließend erläutert, wie aus den erfindungsgemäß erzeugten Referenzimpuls-Teilsignalen $REF_1$ - $REF_4$ im vorliegenden Beispiel letztlich das gewünschte Referenzimpulssignal REF erzeugt wird.

Wie aus Figur 5 ersichtlich, werden in dieser Ausführungsform die in der ersten und vierten Raumrichtung angeordneten ersten und vierten Referenzimpuls-Detektorelemente 24, 27 so zusammengeschaltet, dass am Ausgang eines ersten nachgeordneten Strom-Spannungs-Wandlers 28.1 ein erstes Referenzimpuls-Summensignal $REF_{S1}$ resultiert; analog hierzu werden die in der zweiten und dritten Raumrichtung angeordneten zweiten und dritten Referenzimpuls-Detektorelemente 25, 26 so zusammengeschaltet, dass am Ausgang des nachgeordneten, zweiten Strom-Spannungs-Wandlers 28.2 ein zweites Referenzimpuls-Summensignal $REF_{S2}$ resultiert. In Figur 4a ist der Verlauf der beiden Referenzimpuls-Summensignale $REF_{S1}$, $REF_{S2}$ im Bereich der Referenzposition $x_{REF}$ dargestellt.

Wie ebenfalls aus Figur 4a erkennbar, kann aus den ersten und zweiten Referenzimpuls-Summensignalen $REF_{S1}$, $REF_{S2}$ ohne weitere Zusatzmaßnahmen bereits eine Information diesbezüglich gewonnen werden, auf welcher Seite der Referenzposition $x_{REF}$ sich die Abtasteinheit gerade befindet.

Die beiden ersten und zweiten Referenzimpuls-Summensignalen $REF_{S1}$, $REF_{S2}$ können demzufolge auch als Bereichssignale ausgewertet werden. Solange das erste Referenzimpuls-Summensignal $REF_{S1}$ größer als das zweite Referenzimpuls-Summensignal $REF_{S2}$ ist, befindet sich im vorliegenden Beispiel die Abtasteinheit demzufolge links von der Referenzposition $x_{REF}$, wenn hingegen erste Referenzimpuls-Summensignal $REF_{S1}$ kleiner als das zweite Referenzimpuls-Summensignal $REF_{S2}$ ist, befindet sich die Abtasteinheit rechts von der Referenzposition $x_{REF}$ etc..

Es sei an dieser Stelle erwähnt, dass grundsätzlich jeweils nur eines der beiden Referenzimpuls-Detektorelemente 24 oder 27 bzw. der Referenzimpuls-Detektorelemente 25, 26 erforderlich wäre, um auf erfindungsgemäße Art und Weise ein Referenzimpulssignal REF zu erzeugen. Die Verwendung von jeweils zwei Referenzimpuls-Detektorelementen und die entsprechende Verschaltung derselben gemäß Figur 5 gewährleistet in diesem Beispiel lediglich eine erhöhte Signalintensität bzw. eine verbesserte Unempfindlichkeit gegen Störeinflüsse.

Die beiden ersten und zweiten Referenzimpuls-Summensignale $REF_{S1}$, $REF_{S2}$ werden anschließend mithilfe von jeweils zwei Verstärkereinheiten 29.1, 29.2 mit einem vorgegebenem Verstärkungsfaktor $V = (1 + \varepsilon)$ verstärkt, so dass am Ausgang der beiden Verstärkereinheiten 29.1, 29.2 dritte und sechste Referenzimpuls-Summensignale $REF_{S3}$, $REF_{S6}$ anliegen. Desweiteren werden die beiden Referenzimpuls-Summensignale $REF_{S1}$, $REF_{S2}$ über zwei Abschwächereinheiten 29.3, 29.4 mit einem vorgegebenem Abschwächungsfaktor $A = (1 - \varepsilon)$ abgeschwächt, so dass am Ausgang der beiden Abschwächereinheiten 29.3, 29.4 vierte und fünfte Referenzimpuls-Summensignale $REF_{S4}$, $REF_{S5}$ anliegen. In Figur 4a ist der resultierende Verlauf der dritten bis sechsten Referenzimpuls-Summensignale $REF_{S3}$ - $REF_{S6}$ im Bereich der Referenzposition $x_{REF}$ dargestellt.

Aus den verschiedenen Referenzimpuls-Summensignalen $REF_{S3}$ - $REF_{S6}$ werden daraufhin durch nachfolgende logische Verknüpfungen zwei Referenzimpuls-Hilfssignale $REF_{H1}$, $REF_{H2}$ gebildet. Zu diesem Zweck werden das dritte und fünfte Referenzimpuls-Summensignal $REF_{S3}$, $REF_{S5}$ den beiden Eingängen einer ersten Komparatoreinheit 29.1 zugeführt und das vierte und sechste Referenzimpuls-Summensignal $REF_{S4}$, $REF_{S6}$ den Eingängen einer zweiten Komparatoreinheit 29.2 zugeführt. Am Ausgang der beiden Komparatoreinheiten 29.1, 29.2 liegen die beiden Referenzimpuls-Hilfssignale $REF_{H1}$, $REF_{H2}$ an, deren Verlauf im Bereich der Referenzposition $x_{REF}$ in Figur 4b dargestellt ist.

Mit Hilfe der Komparatoreinheiten 29.1, 29.2 erfolgt die Erzeugung der beiden Referenzimpuls-Hilfssignale $REF_{H1}$, $REF_{H2}$ aus den vier eingangsseitig anliegenden verstärkten bzw. abgeschwächten Referenzimpuls-Summensignalen $REF_{S3}$ - $REF_{S6}$ auf Basis der folgenden Vergleichsoperationen:

$$REF_{H1} = 1, \text{ wenn } REF_{S3} > REF_{S5} \text{ bzw. } REF_{H1} = 0, \text{ wenn } REF_{S3} < REF_{S5}$$

und

$$REF_{H2} = 1, \text{ wenn } REF_{S6} > REF_{S4} \text{ bzw. } REF_{H2} = 0, \text{ wenn } REF_{S6} < REF_{S4}$$

Aus den beiden derart gebildeten Referenzimpuls-Hilfssignalen $REF_{H1}$, $REF_{H2}$ wird abschließend durch eine logische UND-Verknüpfung mit Hilfe des Verknüpfungsgliedes 31 das Referenzimpulssignal REF erzeugt, das sich dann als Rechtecksignal mit einer bestimmten Breite $b_{REF}$ ergibt. In Figur 4c ist das derart resultierende Rechtecksignal dargestellt.

Wie aus den Figuren 4a - 4c ersichtlich lässt sich bei der Erzeugung eines Referenzimpulssignales REF durch die geeignete Wahl der Verstärkungsfaktoren V bzw. Abschwächungsfaktoren A in definierter Art und Weise die resultierende Breite $b_{REF}$ des Referenzimpulssignales REF einstellen und derart an die Periodizität der parallel erzeugten Inkrementalsignale anpassen.

Im erläuterten Beispiel können wie oben erläutert die erzeugten ersten - sechsten Referenzimpuls-Summensignale auch als sog. Bereichssignale fungieren, die jeweils eindeutig die Relativlage der Abtasteinheit in Bezug auf die Referenzposition $x_{REF}$ kennzeichnen. Wie bereits eingangs erwähnt und aus der DE 41 11 873 C2 bekannt, können grundsätzlich derartige Bereichssignale auch zur Erzeugung eines Referenzimpulssignales genutzt werden. Durch den Übergangsbereich zwischen ersten und zweiten Bereichssignalen ist in diesem Fall die Referenzposition $x_{REF}$ definiert. Erfindungsgemäß wurde daher erkannt, dass zur Erzeugung eines Referenzimpulssignales, wie es anhand der Figuren 4a - 4c und 5 erläutert wurde, grundsätzlich auch Bereichssignale herangezogen werden können, die alternativ zur oben erläuterten Art und Weise erzeugt wurden. Erforderlich sind für das erfindungsgemäße Verfahren zum Betrieb einer Positionsmesseinrichtung, insbesondere zur Erzeugung eines Referenzimpulssignales REF, demzufolge lediglich erste und zweite Bereichssignale, die im Bereich der Referenzposition $x_{REF}$ einen Signalverlauf analog zu den ersten und zweiten Referenzimpulssignal-Summensignalen $REF_{S1}$, $REF_{S2}$ gemäß Figur 4a aufweisen. Durch die Verstärkung und Abschwächung mindestens eines Bereichssignales können wiederum dritte und vierte Bereichssignale erzeugt werden. Durch den nachfolgenden Vergleich zwischen dem ersten, dritten oder vierten Bereichssignal mit dem zweiten Bereichssignal oder ggf. hiervon abgeleiteten Bereichssignalen lässt sich wiederum ein Referenzimpulssignal erzeugen.

Vorzugsweise erfolgt auch im erfindungsgemäßen Verfahren eine Verarbeitung der eingangsseitigen Bereichssignale analog zu der Verarbeitung der Referenzimpuls-Teilsignale bzw. -Summensignale. Dies bedeutet, dass auch aus dem zweiten Bereichssignal im vorliegenden Beispiel durch Abschwächung und Verstärkung fünfte und sechste Bereichssignale resultieren, die dann wiederum mit dem ersten, dritten oder vierten Bereichssignal verglichen werden, um ein Referenzimpulssignal zu erzeugen.

Die Verstärkung und Abschwächung der Bereichssignale erfolgt ebenfalls wiederum mit definierten Verstärkungs- und Abschwächungsfaktoren. Über deren Wahl lässt sich letztlich - wie oben erläutert - die Breite des resultierenden Referenzipulssignales einstellen.

Als Anforderung hinsichtlich der zu erzeugenden Bereichssignale ist lediglich aufzuführen, dass das erste und zweite Bereichssignal jeweils einen eindeutigen Signalpegel in jedem der beiden Bereiche aufweist, d.h. dass sich die Signalpegel geeignet unterscheiden lassen, wie dies etwa für die ersten und zweiten Referenzimpuls-Summensignale $REF_{S1}$, $REF_{S2}$ im obigen Beispiel der Fall ist.

Die Erzeugung der ersten und zweiten Bereichssignale kann jedoch auch alternativ zum oben erläuterten Beispiel erfolgen. So können etwa die Bereichssignale auch aus einer separaten Bereichsspur auf dem Maßstab abgeleitet werden. Die Bereichsspur umfasst z.B. wiederum zwei Teilspuren, die jeweils komplementär zueinader ausgebildet sind und z.B. auf einer Seite der Referenzposition $x_{REF}$ voll durchlässig ist, während diese im Bereich rechts von der Referenzposition $x_{REF}$ opak ausgebildet ist. Jede der beiden Teilspuren wird von einem Detektorelement zur Erzeugung der Bereichssignale abgetastet, so dass sich auch bei einer derartigen Ausgestaltung von Maßstab und Abtasteinheit Bereichssignale mit dem erforderlichen Verlauf im Bereich der Referenzposition $x_{REF}$ erzeugen lassen.

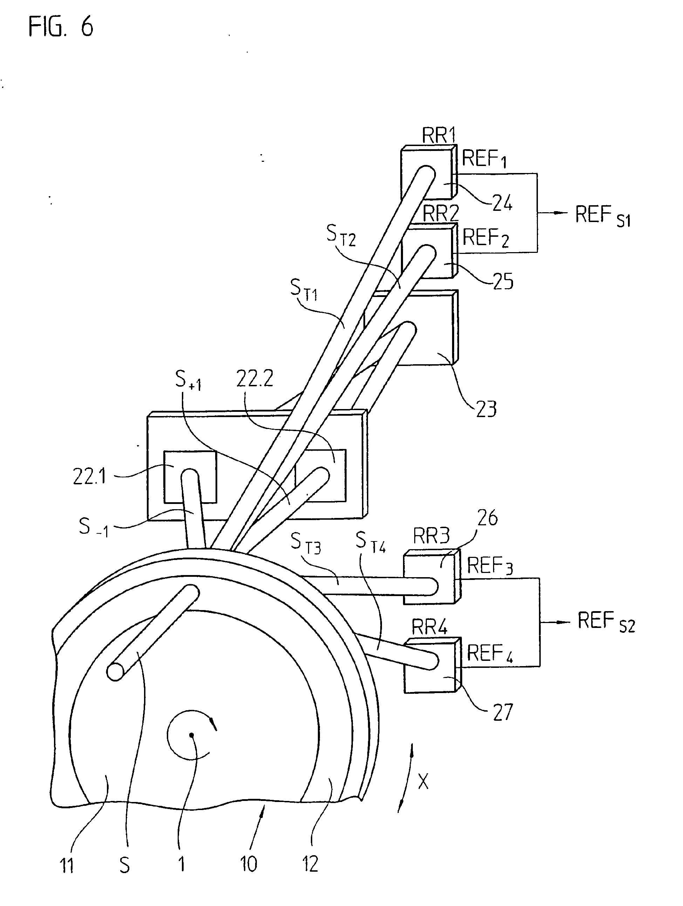

Eine zweite Variante zur Erzeugung eines Referenzimpulssignales sei nachfolgend anhand der Figuren 6, 7 sowie 8a - 8c erläutert.

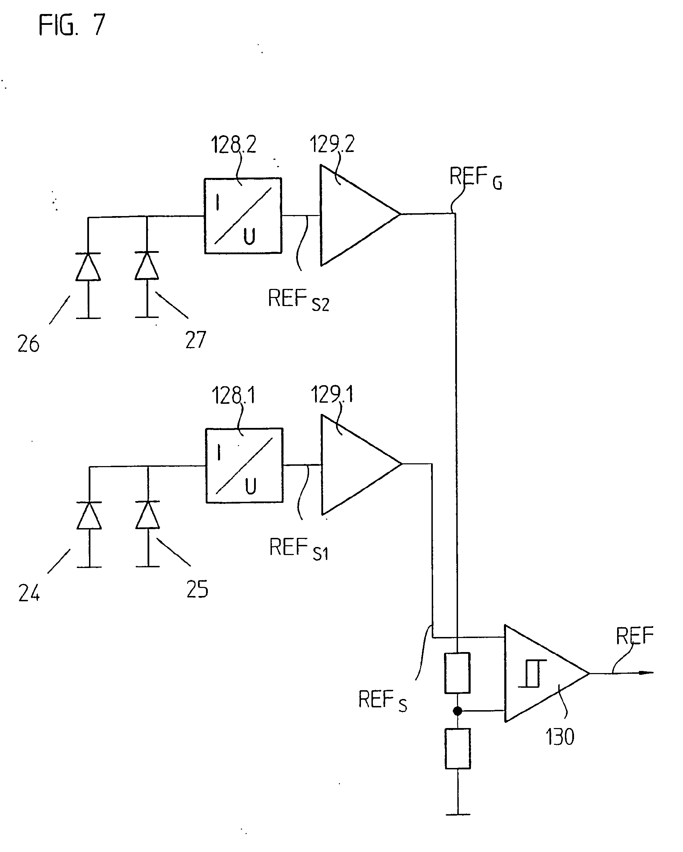

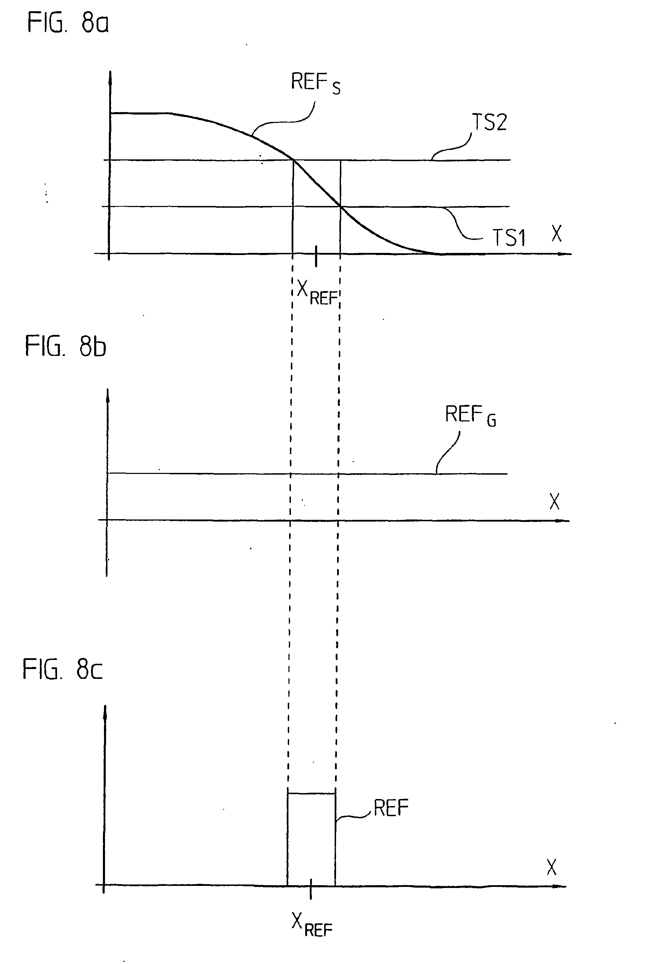

Figur 6 zeigt hierbei wiederum die Vorrichtung, wie sie in Figur 2 grundsätzlich bereits erläutert wurde. Im folgenden sei deshalb lediglich auf die Unterschiede zur oben erläuterten Ausführungsform eingegangen. Hierzu sei auch auf die Figur 7 verwiesen, die ein Blockschaltbild bzgl. der Verschaltung zeigt. Im Unterschied zum obigen Beispiel erfolgt ein Zusammenschalten der ersten und zweiten Referenzimpuls-Detektorelemente 24, 25 bzw. der jeweiligen Referenzimpuls-Teilsignale $REF_1$, $REF_2$ - respektive Bereichssignale -, so dass am Ausgang eines ersten nachgeordneten Strom-Spannungs-Wandlers 128.1 ein erstes Referenzimpuls-Summensignal $REF_{S1}$ anliegt. Analog hierzu werden die dritten und vierten Referenzimpulssignal-Detektorelemente 26, 27 bzw. die jeweiligen Referenzimpuls-Teilsignale $REF_3$, $REF_4$ - respektive Bereichssignale - so zusammengeschaltet, dass am Ausgang des nachgeordneten zweiten Strom-Spannungs-Wandlers 128.2 ein Signal resultiert, das nachfolgend als zweites Referenzimpuls-Summensignal $REF_{S2}$ bezeichnet sei. Beim Signal $REF_{S2}$ handelt es sich um ein Signal, das im wesentlichen proportional zur Summe der Signale $REF_3$ und $REF_4$ ist und auch als Referenzimpuls-Gleichlichtsignal bezeichnet werden kann. Mit Hilfe von Verstärkereinheiten 129.1, 129.2, die den Strom-Spannungs-Wandlern 128.1, 128.2 jeweils nachgeordnet sind, erfolgt eine Verstärkung der beiden Signale $REF_{S1}$, $REF_{S2}$. Am Ausgang der beiden Verstärkereinheiten 129.1, 129.2 liegen die verstärkten ersten und zweiten Signale $REF_S$ bzw. $REF_G$ an, deren Verlauf im Bereich der Referenzposition $x_{REF}$ in den Figur 8a und 8b dargestellt ist.

Wie aus Figur 8b erkennbar weist das Signal $REF_S$ im wesentlichen einen gleichbleibenden Signalpegel auf, während sich der Signalpegel des Signales $REF_S$ im Bereich der Referenzposition $x_{REF}$ stark verändert. Zur Erzeugung des gewünschten Referenzimpulssignales REF werden daher vom Signal $REF_G$ zwei Trigger- bzw. Referenzsignale TS1, TS2 mit jeweils konstanten Signalpegeln abgeleitet, die in Figur 8a ebenfalls dargestellt sind und die zum Erzeugen des eigentlichen Referenzimpulssignales REF an den Schnittpunkten mit dem Signal $REF_S$ dienen. Das daraus resultierende Signal REF ist schließlich in Figur 8c dargestellt.

Die schaltungstechnische Realisierung dieser Variante zur Erzeugung des Referenzimpulssignales REF ist aus Figur 7 ersichtlich; so resultiert das Referenzimpulssignal REF am Ausgang der Vergleichereinheit 130, an deren Eingängen die Signale $REF_G$ und $REF_S$ anliegen. Die Vergleichereinheit 130 ist in bekannter Art und Weise beispielsweise als Fensterkomparator ausgebildet, wobei aus dem jeweiligen Pegel des anliegenden Signales $REF_G$ die Fensterbreite und damit die Lage der beiden Triggersignale TS1, TS2 bestimmt ist.

Neben den erläuterten Ausführungsbeispielen existieren selbstverständlich noch weitere alternative Ausgestaltungsmöglichkeiten der vorliegenden Erfindung.

So wäre es etwa möglich, im ersten erläuterten Beispiel lediglich das erste erzeugte Referenzimpuls-Summensignal $REF_{S1}$ zu verstärken und abzuschwächen und anschließend durch logische Vergleichsoperationen mit dem zweiten, unveränderten Referenzimpuls-Summensignal ein Referenzimpulssignal definierter Breite zu erzeugen.

Desweiteren könnten die beiden Referenzimpuls-Hilfssignale auch durch den logischen Vergleich anderer Signalkombinationen erzeugt werden usw..

**Patentansprüche**

1. Positionsmesseinrichtung zur Erzeugung von periodischen Inkrementalsignalen und mindestens einem Referenzimpulssignal, bestehend aus

   - einem Maßstab (10) mit einer Spur (12), in der eine periodische Inkrementalteilung mit einer bestimmten Inkremental-Teilungsperiode ($TP_{INC}$) angeordnet ist, die sich in einer Messrichtung (x) erstreckt und wobei die Spur (12) an mindestens einer definierten Referenzposition ($x_{REF}$) eine Unstetigkeit bzgl. einer optischen Eigenschaft zur Erzeugung eines Referenzimpulssignales (REF) aufweist und
   - einer Abtasteinheit (20), die relativ zum Maßstab (10) in Messrichtung (x) über eine bestimmte Messstrecke (D) beweglich ist und neben einer Lichtquelle (21) mehrere Detektorelemente (23, 24, 25, 26, 27) zur photoelektrischen Abtastung der Inkrementalteilung umfasst,
   **dadurch gekennzeichnet, dass**
   - in einem ersten Abschnitt ($D_1$) der Messstrecke die Inkrementalteilung eine erste Transversal-Substruktur besitzt, die auftreffende Strahlenbündel (S) in mindestens eine erste Raumrichtung (RR1) ablenkt und in einem zweiten Abschnitt ($D_2$) der Messstrecke die Inkrementalteilung eine zweite Transversal-Substruktur besitzt, die auftreffende Strahlenbündel (S) in mindestens eine zweite Raumrichtung (RR2) ablenkt, die von der ersten Raumrichtung (RR1) verschieden ist, so dass im Übergangsbereich zwischen dem ersten und zweiten Abschnitt ($D_1$, $D_2$) eine Unstetigkeit bzgl. der optischen Ablenkwirkung der Transversal-Substrukturen der Inkrementalteilung vorliegt und
   - auf Seiten der Abtasteinheit (20) jeweils ein oder mehrere Referenzimpuls-Detektorelemente (24, 25, 26, 27) in den verschiedenen Raumrichtungen (RR1, RR2) angeordnet sind, an denen Referenzimpuls-Teilsignale ($REF_1$ - $REF_4$) anliegen, aus deren Verarbeitung das Referenzimpulssignal (REF) resultiert.

2. Positionsmesseinrichtung nach Anspruch 1, **dadurch gekennzeichnet, dass** die Inkrementalteilung aus periodisch mit der Inkremental-Teilungsperiode ($TP_{INC}$) in Messrichtung (x) angeordneten Teilbereichen (TB1, TB2) mit unterschiedlichen optischen Eigenschaften besteht, wobei die Teilbereiche (TB1, TB2) eine Längsausdehnung in einer Richtung (y) besitzen, die senkrecht zur Messrichtung (x) orientiert ist und die Transversal-Substrukturen jeweils als periodische Strukturen mit einer definierten Ablenk-Teilungsperiode ($TP_{TRANS,1}$, $TP_{TRANS,2}$) entlang der Richtung (y) der Längsausdehnung der Teilbereiche (TB1, TB2) ausgebildet sind.

3. Positionsmesseinrichtung nach Anspruch 2, **dadurch gekennzeichnet, dass** die erste Transversal-Substruktur eine erste Ablenk-Teilungsperiode ($TP_{TRANS,1}$) aufweist und die zweite Transversal-Substruktur eine zweite Ablenk-Teilungsperiode ($TP_{TRANS,2}$) aufweist, die von der ersten Ablenk-Teilungsperiode ($TP_{TRANS,1}$) verschieden ist.

4. Positionsmesseinrichtung nach Anspruch 2, **dadurch gekennzeichnet, dass**

   - die erste Transversal-Substruktur eine Ablenkung in die erste Raumrichtung (RR1) und in eine weitere vierte Raumrichtung (RR4) bewirkt, die verschieden von der ersten Raumrichtung (RR1) ist und
   - die zweite Transversal-Substruktur eine Ablenkung in die zweite Raumrichtung (RR2) und in eine weitere dritte Raumrichtung (RR3) bewirkt, die verschieden von der zweiten Raumrichtung (RR2) ist.

5. Positionsmesseinrichtung nach Anspruch 4, **dadurch gekennzeichnet, dass** die Raumrichtungen (RR1 - RR4), in die eine Ablenkung der Strahlenbündel ($S_{T1}$ - $S_{T4}$) resultiert, eine Ebene aufspannen, die senkrecht zur Messrichtung (x) und parallel zur Richtung (y) der Längsausdehnung der Teilbereiche (TB1, TB2) der Inkrementalteilung orientiert ist.

6. Positionsmesseinrichtung nach Anspruch 4, **dadurch gekennzeichnet, dass** die ersten und vierten oder die zweiten und dritten Raumrichtungen (RR1 - RR4) den Richtungen entsprechen, in die durch die Transversal-Substruktur mit der jeweiligen Ablenk-Teilungsperiode ($TP_{TRANS,1}$, $TP_{TRANS,2}$) eine Beugung in die +/-1. Beugungsordnungen resultiert.

7. Positionsmesseinrichtung nach Anspruch 2, **dadurch gekennzeichnet, dass** die Teilbereiche der Inkrementalteilung in Richtung (y) ihrer Längsausdehnung sinusförmige Konturbegrenzungen aufweisen.

8. Positionsmesseinrichtung nach Anspruch 2, **dadurch gekennzeichnet, dass** die Teilbereiche der Inkrementalteilung in Richtung (y) ihrer Längsausdehnung dreieckförmige Konturbegrenzungen aufweisen.

9. Positionsmesseinrichtung nach Anspruch 1, **dadurch gekennzeichnet, dass** die Inkrementalteilung auf einem scheibenförmigen Trägerelement (11) kreisförmig in Umfangsrichtung angeordnet ist und die ersten und zweiten Abschnitte ($D_1$, $D_2$) der Inkrementalteilung zwei benachbarte Kreissegmente darstellen.

10. Positionsmesseinrichtung nach Anspruch 9, **dadurch gekennzeichnet, dass** die sich die beiden Kreissegmente jeweils über 180° erstrecken, so dass an zwei gegenüberliegenden Referenzpositionen ($x_{REF}$) entlang der Umfangsrichtung Referenzimpulssignale (REF) erzeugbar sind.

11. Positionsmesseinrichtung nach Anspruch 1, **dadurch gekennzeichnet, dass** die Inkrementalteilung als Phasengitter ausgebildet ist.

12. Positionsmesseinrichtung nach Anspruch 1, **dadurch gekennzeichnet, dass** die Inkrementalteilung als Durchlichtteilung ausgebildet ist.

13. Positionsmesseinrichtung nach Anspruch 1, **dadurch gekennzeichnet, dass** eine Beleuchtung der Inkrementalteilung mit einem kollimierten Strahlenbündel (S) mit kleinem Durchmesser erfolgt.

14. Positionsmesseinrichtung nach Anspruch 4, **dadurch gekennzeichnet, dass**

    - in der ersten und vierten Raumrichtung (RR1, RR4) erste und vierte Referenzimpuls-Detektorelemente (24, 27) angeordnet sind, die derart verschaltet sind, dass aus den anliegenden ersten und vierten Referenzimpuls-Teilsignalen ($REF_1$, $REF_4$) ein erstes Referenzimpuls-Summensignal ($REF_{S1}$) resultiert und
    - in den zweiten und dritten Raumrichtungen (RR2, RR3) zweite und dritte Referenzimpuls-Detektorelemente (25, 26) angeordnet sind, die derart verschaltet sind, dass aus den anliegenden zweiten und dritten Referenzimpuls-Teilsignalen ($REF_2$, $REF_3$) ein zweites Referenzimpuls-Summensignal ($REF_{S2}$) resultiert,
    - wobei aus der Verarbeitung des ersten und zweiten Referenzimpuls-Summensignales ($REF_{S1}$, $REF_{S2}$) das Referenzimpulssignal (REF) resultiert.

15. Positionsmesseinrichtung nach Anspruch 14, **dadurch gekennzeichnet, dass**

    - aus dem ersten Referenzimpuls-Summensignal ($REF_{S1}$) durch Verstärkung und Abschwächung weitere dritte und vierte Referenzimpuls-Summensignale ($REF_{S3}$, $REF_{S4}$) resultieren und
    - aus dem zweiten Referenzimpuls-Summensignal ($REF_{S2}$) durch Abschwächung und Verstärkung weitere fünfte und sechste Referenzimpuls-Summensignale ($REF_{S5}$, $REF_{S6}$) resultieren und
    - aus der logischen Verknüpfung der dritten, vierten, fünften und sechsten Referenzimpuls-Summensignale ($REF_{S3}$, $REF_{S4}$, $REF_{S5}$, $REF_{S6}$) das Referenzimpulssignal (REF) resultiert.

16. Positionsmesseinrichtung nach Anspruch 15, **dadurch gekennzeichnet, dass** aus der logischen Verknüpfung der dritten, vierten, fünften und sechsten Referenzimpuls-Summensignale ($REF_{S3}$, $REF_{S4}$, $REF_{S5}$, $REF_{S6}$) zwei Referenzimpuls-Hilfssignale ($REF_{H1}$, $REF_{H2}$) resultieren, aus deren logischer UND-Verknüpfung ein Referenzimpulssignal (REF) in Form eines Rechtecksignales mit einer bestimmten Breite ($b_{REF}$) resultiert.

17. Positionsmesseinrichtung nach Anspruch 4, **dadurch gekennzeichnet, dass**

    - in der ersten und zweiten Raumrichtung (RR1, RR2) erste und zweite Referenzimpuls-Detektorelemente (24, 25) angeordnet sind, die derart verschaltet sind, dass aus den anliegenden ersten und zweiten Referenzimpuls-Teilsignalen ($REF_1$, $REF_2$) ein erstes Referenzimpuls-Summensignal ($REF_{S1}$) resultiert und
    - in den dritten und vierten Raumrichtungen (RR3, RR4) dritte und vierte Referenzimpuls-Detektorelemente (26, 27) angeordnet sind, die derart verschaltet sind, dass aus den anliegenden dritten und vierten Referenz-impuls-Teilsignalen (REF$_3$, REF$_4$) ein zweites Referenzimpuls-Summensignal (REF$_{S2}$) resultiert,
- wobei aus der Verarbeitung des ersten und zweiten Referenzimpuls-Summensignales (REF$_{S1}$, REF$_{S2}$) das Referenzimpulssignal (REF) resultiert.

18. Positionsmesseinrichtung nach Anspruch 17, **dadurch gekennzeichnet, dass** die ersten und zweiten Referenzimpuls-Summensignale (REF$_{S1}$, REF$_{S2}$) nach einer Verstärkung an den Eingängen einer Vergleichereinheit (130) anliegen und an deren Ausgang das Referenzimpulssignal (REF) resultiert.

19. Verfahren zum Betrieb einer Positionsmesseinrichtung, insbesondere zur Erzeugung eines Referenzimpulssignales an mindestens einer Referenzposition entlang einer Messstrecke, wobei aus einer Spur auf einem Maßstab erste und zweite Bereichssignale ableitbar sind, die jeweils eindeutig die Relativlage der gegenüber dem Maßstab beweglichen Abtasteinheit in Bezug auf die Referenzposition kennzeichnen und durch den Übergangsbereich in mindestens einem Bereichssignal die Referenzposition definiert ist,
**dadurch gekennzeichnet,**
**dass** aus dem erfolgenden Vergleich zwischen dem ersten Bereichssignal oder davon abgeleiteten weiteren Signalen mit dem zweiten Bereichssignal oder davon abgeleiteten weiteren Signalen ein Referenzimpulssignal (REF) erzeugbar ist.

20. Verfahren nach Anspruch 19, **dadurch gekennzeichnet, dass**

- mindestens das erste Bereichssignal verstärkt und abgeschwächt wird, so dass daraus dritte und vierte Bereichssignale resultieren und
- aus dem Vergleich zwischen dem ersten, dritten oder vierten Bereichssignal mit dem zweiten Bereichssignal oder hiervon abgeleiteten weiteren Bereichssignalen ein Referenzimpulssignal (REF) erzeugt wird.

21. Verfahren nach Anspruch 20, **dadurch gekennzeichnet, dass** das zweite Bereichssignal verstärkt und abgeschwächt wird, so dass daraus fünfte und sechste Bereichssignale resultieren und aus dem Vergleich zwischen dem ersten, dritten oder vierten Bereichssignal mit dem zweiten, fünften oder sechsten Bereichssignal ein Referenzimpulssignal (REF) erzeugt wird.

22. Verfahren nach Anspruch 20, **dadurch gekennzeichnet, dass** das erste und zweite Bereichssignal jeweils einen eindeutigen Signalpegel für jeden der beiden Bereiche aufweist.

23. Verfahren nach Anspruch 20, **dadurch gekennzeichnet, dass** zur Verstärkung und Abschwächung der Bereichssignale definierte Verstärkungs- und Abschwächungsfaktoren (A, V) gewählt werden.

24. Verfahren nach Anspruch 23, **dadurch gekennzeichnet, dass** durch die Wahl der Verstärkungs- und Abschwächungsfaktoren (A, V) die Breite (b) des resultierenden Referenzimpulssignales (REF) eingestellt wird.

25. Verfahren nach Anspruch 19, **dadurch gekennzeichnet, dass** zur Erzeugung des Referenzimpulssignales (REF) einer Vergleichereinheit (130) ein erstes Signal (REF$_S$) zugeführt wird, das aus zwei Bereichssignalen (REF$_1$, REF$_2$) abgeleitet wird und wobei sich das erste Signal (REF$_S$) im Bereich der Referenzposition (x$_{REF}$) stark verändert und der Vergleichereinheit (130) ferner ein zweites Signal (REF$_G$) zugeführt wird, welches ebenfalls aus zwei Bereichs-signalen (REF$_3$, REF$_4$) abgeleitet wird und wobei das zweite Signal (REF$_G$) im Bereich der Referenzposition (x$_{REF}$) im wesentlichen einen gleichbleibenden Signalpegel aufweist.

**Claims**

1. A position measuring device for generating periodic incremental signals and at least one reference pulse signal consisting of

- a gauge (10) comprising a track (12), in which a periodic incremental scale comprising a defined incremental scale period (TP$_{INC}$) is disposed, which extends in a direction of measurement (x) and wherein the track (12) encompasses a discontinuity with respect to an optical property for generating a reference pulse signal (REF) in at least one defined reference position (x$_{REF}$) and
- a scanner unit (20), which can be displaced across a defined measuring length (D) relative to the gauge (10) in the direction of measurement (x) and which, in addition to a light source (21), comprises a plurality of detector elements (23, 24, 25, 26, 27) for the photoelectric scanning of the incremental scale,

**characterized in that**

- in a first section ($D_1$) of the measuring length (D), the incremental scale has a first transverse substructure, which deflects incident ray beams (S) in at least a first direction of space (RR1) and **in that**, in a second section ($D_2$) of the measuring length, the incremental scale has a second transverse substructure, which deflects incident ray beams (S) in at least a second direction of space (RR2), which differs from the first direction of space (RR1) so that in the transition region between the first and the second section ($D_1$, $D_2$) a discontinuity with respect to the optical deflection effect of the transverse substructures of the incremental scale is at hand and
- on the sides of the scanner unit (20) one or a plurality of reference pulse detector elements (24, 25, 26, 27) are in each case disposed in the different directions of space (RR1, RR2), which are supplied with partial reference pulse signals ($REF_1$-$REF_4$), which are processed to result in the reference pulse signal (REF).

2. The position measuring device according to claim 1, **characterized in that** the incremental scale consists of partial regions (TB1, TB2), which are disposed periodically with the incremental scale period ($TP_{INC}$) in the direction of measurement (x) and which comprise different optical properties, wherein the partial regions (TB1, TB2) have a longitudinal extension in a direction (y), which is oriented at right angles to the direction of measurement (x) and wherein the transverse substructures are embodied in each case as periodic structures comprising a defined deflection scale period ($TP_{TRANS,1}$, $TP_{TRANS,2}$) along the direction (y) of the longitudinal extension of the partial regions (TB1, TB2).

3. The position measuring device according to claim 2, **characterized in that** the first transverse substructure encompasses a first deflection scale period ($TP_{TRANS,1}$) and the second transverse substructure encompasses a second deflection scale period ($TP_{TRANS,2}$), which differs from the first deflection scale period ($TP_{TRANS,1}$).

4. The position measuring device according to claim 2, **characterized in that**

- the first transverse substructure causes a deflection in the first direction of space (RR1) and in a further fourth direction of space (RR4), which differs from the first direction of space (RR1) and
- the second transverse substructure causes a deflection in the second direction of space (RR2) and in a further third direction of space (RR3), which differs from the second direction of space (RR2).

5. The position measuring device according to claim 4, **characterized in that** the directions of space (RR1-RR4), in which a deflection of the ray beams ($S_{T1}$-$S_{T4}$) result, stretch a plane, which is oriented at right angles to the direction of measurement (x) and parallel to the direction (y) of the longitudinal extension of the partial regions (TB1, TB2) of the incremental scale.

6. The position measuring device according to claim 4, **characterized in that** the first and fourth or the second and third directions of space (RR1-RR4) correspond to the directions, in which a deflection in the +/-1 deflection order results through the transverse substructure comprising the respective deflection scale period ($TP_{TRANS,1}$, $TP_{TRANS,2}$).

7. The position measuring device according to claim 2, **characterized in that** the partial regions of the incremental scale encompass sinusoidal contour limitations in the direction (y) of their longitudinal extension.

8. The position measuring device according to claim 2, **characterized in that** the partial regions of the incremental scale encompass triangular contour limitations in the direction (y) of their longitudinal extension.

9. The position measuring device according to claim 1, **characterized in that** the incremental scale is disposed on a discoidal support element (11) so as to be circular in peripheral direction and **in that** the first and second sections ($D_1$, $D_2$) of the incremental scale represent two adjacent segments of a circle.

10. The position measuring device according to claim 9, **characterized in that** the two segments of a circle in each case extend across 180° so that reference pulse signals (REF) can be generated on two opposite reference positions ($x_{REF}$) along the peripheral direction.

11. The position measuring device according to claim 1, **characterized in that** the incremental scale is embodied as a phase grid.

12. The position measuring device according to claim 1, **characterized in that** the incremental scale is embodied as a transmitted light scale.

13. The position measuring device according to claim 1, **characterized in that** an illumination of the incremental scale takes place by means of a collimated ray beam (S) comprising a small diameter.

14. The position measuring device according to claim 4, **characterized in that**

   - in the first and fourth direction of space (RR1, RR4) first and fourth reference pulse detector elements (24, 27) are disposed, which are connected in such a manner that a first reference pulse summed signal ($REF_{S1}$) results from the supplied first and fourth reference pulse scale signals ($REF_1$, $REF_4$) and
   - in the second and third directions of space (RR2, RR3) second and third reference pulse detector elements (25, 26) are disposed, which are connected in such a manner that a second reference pulse summed signal ($REF_{S2}$) results from the supplied second and third reference pulse scale signals ($REF_2$, $REF_3$),
   - wherein the first and second reference pulse summed signal ($REF_{S1}$, $REF_{S2}$) is processed to result in the reference pulse signal (REF).

15. The position measuring device according to claim 14, **characterized in that**

   - further third and fourth reference pulse summed signals ($REF_{S3}$, $REF_{S4}$) result from the first reference pulse summed signal ($REF_{S1}$) by means of amplification and attenuation and
   - further fifth and sixth reference pulse summed signals ($REF_{S5}$, $REF_{S6}$) result from the second reference pulse summed signal ($REF_{S2}$) by means of attenuation and amplification and
   - the reference pulse signal (REF) results from the logical connection of the third, fourth, fifth and sixth reference pulse summed signals ($REF_{S3}$, $REF_{S4}$, $REF_{S5}$, $REF_{S6}$).

16. The position measuring device according to claim 15, **characterized in that** the logical connection of the third, fourth, fifth and sixth reference pulse summed signals ($REF_{S3}$, $REF_{S4}$, $REF_{S5}$, $REF_{S6}$) result in two reference pulse auxiliary signals ($REF_{H1}$, $REF_{H2}$), from the logical AND gating of which results a reference pulse signal (REF) in the form of a rectangular signal comprising a defined width ($b_{REF}$).

17. The position measuring device according to claim 4, **characterized in that**

   - in the first and second direction of space (RR1, RR2) first and second reference pulse detector elements (24, 25) are disposed, which are connected in such a manner that the supplied first and second reference pulse scale signals ($REF_1$, $REF_2$) result in a first reference pulse summed signal ($REF_{S1}$) and
   - in the third and fourth directions of space (PR3, PR4) third and fourth reference pulse detector elements (26, 27) are disposed, which are connected in such a manner that a second reference pulse summed signal ($REF_{S2}$) results from the supplied third and fourth reference pulse scale signals ($REF_3$, $REF_4$),
   - wherein the first and second reference pulse summed signal ($REF_{S1}$, $REF_{S2}$) are processed to result in the reference pulse signal (REF).

18. The position measuring device according to claim 17, **characterized in that** the first and second reference pulse summed signals ($REF_{S1}$, $REF_{S2}$) are supplied after an amplification at the inputs of a comparator unit (130) and the reference pulse signal (REF) results at the output thereof.

19. A method for operating a position measuring device, in particular for generating a reference pulse signal on at least one reference position along a measuring length, wherein first and second region signals can be derived from a track on a gauge, said measuring signals clearly characterize in each case the relative position of the scanner unit, which is displaceable with respect to the gauge, in relation to the reference position and the reference position is defined in at least one region signal by means of the transition region, **characterized in that** a reference pulse signal (REF) can be generated from the comparison between the first region signal or further signals derived therefrom with the second region signal or further signals derived therefrom.

20. The method according to claim 19, **characterized in that**

- at least the first region signal is amplified and attenuated so that third and fourth region signal result therefrom and
- a reference pulse signal (REF) is generated from the comparison between the first, third or fourth region signal with the second region signal or further region signals derived therefrom.

21. The method according to claim 20, **characterized in that** the second region signal is amplified and attenuated so that fifth and sixth region signals result therefrom and that a reference pulse signal (REF) is generated from the comparison between the first, third or fourth region signal with the second, fifth or sixth region signal.

22. The method according to claim 20, **characterized in that** the first and second region signal in each case encompasses a clear signal level for each of the two regions.

23. The method according to claim 20, **characterized in that** defined amplification and attenuation factors (A, V) are chosen for amplifying and attenuating the region signals.

24. The method according to claim 23, **characterized in that** the width (b) of the resulting reference pulse signal (REF) is set by means of the selection of the amplification and attenuation factors (A, V).

25. The method according to claim 19, **characterized in that,** for the purpose of generating the reference pulse signal (REF), a first signal (REF$_S$), which is derived from two region signals (REF$_1$, REF$_2$), is supplied to a comparator unit (130) and wherein the first signal (REF$_S$) is highly amplified in the region of the reference position (x$_{REF}$) and that a second signal (REF$_G$), which is also derived from two region signals (REF$_3$, REF$_4$) is further supplied to the comparator unit (130) and wherein the second signal (REF$_G$) encompasses a substantially constant signal level in the region of the reference position (x$_{REF}$).

## Revendications

1. Dispositif de mesure de position, pour la fabrication de signaux incrémentaux et au moins un signal d'impulsion de référence, constitué des éléments suivants :

   - une échelle de mesure (10) avec une piste (12), dans laquelle se trouve une graduation incrémentale périodique, avec une certaine période de graduation incrémentale (TP$_{INC}$) s'étendant dans une direction de mesure (x), la piste (12) présentant une discontinuité quant à une propriété optique pour la fabrication d'un signal d'impulsion de référence (REF), au moins au niveau d'une position de référence définie (x$_{REF}$), et
   - une unité de balayage (20) pouvant être déplacée par rapport à l'échelle de mesure (10), dans la direction de mesure (x) sur un certain trajet de mesure (D), et comprenant plusieurs éléments de détecteur (23, 24, 25, 26, 27) pour l'exploration photoélectrique, en plus d'une source de lumière (21),

   **caractérisé en ce que**

   - dans une première section (D$_1$) du trajet de mesure, la graduation incrémentale possède une première sous-structure transversale, qui dévie les faisceaux (S) incidents vers au moins une première direction spatiale (RR1), et dans une deuxième section (D$_2$) du trajet de mesure, la graduation incrémentale possède une deuxième sous-structure transversale, qui dévie les faisceaux incidents (S) vers au moins une deuxième direction spatiale (RR2) différente de la première direction spatiale (RR1), de façon à avoir une discontinuité quant à l'effet de déviation optique des sous-structures transversales, dans la région de transition entre la première et la deuxième section (D$_1$, D$_2$), et
   - du côté de l'unité de balayage (20) sont disposés un ou plusieurs éléments de détecteur à impulsion de référence (24, 25, 26, 27), dans les différentes directions spatiales (RR1, RR2), sur lesquels s'appliquant des signaux partiels d'impulsion de référence (REF$_1$ - REF$_4$), à partir du traitements desquels résulte le signal d'impulsion de référence (REF).

2. Dispositif de mesure de position selon la revendication 1, **caractérisé en ce que** la graduation incrémentale est constituée de zones partielles (TB1, TB2) avec différentes propriétés optiques, disposées périodiquement avec la période de graduation incrémentale (TP$_{INC}$) dans la direction de mesure (x), les zones partielles (TB1, TB2) possédant une extension longitudinale dans une direction (y) orientée perpendiculairement à la direction de mesure (x), et les sous-structures transversales étant toutes conçues comme des structures périodiques, avec une certaine période de division de déviation (TP$_{TRANS1}$, TP$_{TRANS2}$), le long de la direction (y) de l'extension longitudinale des zones partielles (TB1, TB2).

3. Dispositif de mesure de position selon la revendication 2, **caractérisé en ce que** la première sous-structure transversale comporte une première période de division de déviation ($TP_{TRANS1}$), et la deuxième sous-structure transversale comporte une deuxième période de division de déviation ($TP_{TRANS2}$), qui est différente de la première période de division de déviation ($TP_{TRANS1}$).

4. Dispositif de mesure de position selon la revendication 2, **caractérisé en ce que**

   - la première sous-structure transversale produit une déviation vers une première direction spatiale (RR1) et vers une autre, quatrième direction spatiale (RR4), qui est différente de la première direction spatiale (RR1), et
   - la deuxième sous-structure transversale produit une déviation dans la deuxième direction spatiale (RR2) et vers une autre, troisième direction spatiale (RR3), qui est différente de la deuxième direction spatiale (RR2).

5. Dispositif de mesure de position selon la revendication 4, **caractérisé en ce que** les directions spatiales (RR1 - RR4), dans lesquelles résulte une déviation des faisceaux ($S_{T1}$ - $S_{T4}$), forment un plan qui est orienté perpendiculairement à la direction de mesure (x) et parallèlement à la direction (y) de l'extension longitudinale des zones partielles (TB1, TB2) de la graduation incrémentale.

6. Dispositif de mesure de position selon la revendication 4, **caractérisé en ce que** la première et la quatrième ou encore la deuxième et la troisième directions spatiales (RR1 - RR4) correspondent aux directions dans lesquelles résulte une inclinaison de l'ordre de +/- 1, de par la sous-structure transversale, avec chacune dés périodes de division de déviation ($TP_{TRANS1}$, $TP_{TRANS2}$).

7. Dispositif de mesure de position selon la revendication 2, **caractérisé en ce que** les zones partielles de la graduation incrémentale comportent des délimitations de contour en forme de sinus dans la direction (y) de leur extension longitudinale.

8. Dispositif de mesure de position selon la revendication 2, **caractérisé en ce que** les zones partielles de la graduation incrémentale comportent des délimitations de contour en forme de triangles dans la direction (y) de leur extension longitudinale.

9. Dispositif de mesure de position selon la revendication 1, **caractérisé en ce que** la graduation incrémentale est disposée en forme de cercle dans la direction du pourtour, sur un élément de support en forme de disque (11), et **en ce que** les premières et deuxièmes sections ($D_1$, $D_2$) de la graduation incrémentale représentent deux segments de cercle adjacents.

10. Dispositif de mesure de position selon la revendication 9, **caractérisé en ce que** chacun des deux segments de cercle s'étend sur 180°, de façon à ce que des signaux d'impulsion de référence (REF) puissent être produits en deux positions de référence ($x_{REF}$) situées l'une en face de l'autre, le long de la direction du pourtour.

11. Dispositif de mesure de position selon la revendication 1, **caractérisé en ce que** la graduation incrémentale est conçue comme une grille de phases.

12. Dispositif de mesure de position selon la revendication 1, **caractérisé en ce que** la graduation incrémentale est conçue comme une division de lumière transmise.

13. Dispositif de mesure de position selon la revendication 1, **caractérisé en ce qu'**un éclairage de la graduation incrémentale est réalisé avec un faisceau collimaté (S) à petit diamètre.

14. Dispositif de mesure de position selon la revendication 4, **caractérisé en ce que**

   - dans la première et la quatrième direction spatiale ($RR_1$, $RR_4$) sont disposés des éléments de détecteur à impulsion de référence (24, 27), qui sont connectés de telle manière qu'un premier signal total d'impulsion de référence ($REF_{S1}$) résulte du premier et du quatrième signal partiel d'impulsion de référence ($REF_1$, $REF_4$), et
   - dans la deuxième et la troisième direction spatiale ($RR_2$, $RR_3$) sont disposés des éléments de détecteur à impulsion de référence (25, 26), qui sont connectés de telle manière qu'un deuxième signal total d'impulsion de référence ($REF_{S2}$) résulte du deuxième et du troisième signal partiel d'impulsion de référence ($REF_2$, $REF_3$),

- le signal d'impulsion de référence (REF) résultant du traitement du premier et du deuxième signal total d'impulsion de référence (REF$_{S1}$, REF$_{S2}$).

**15.** Dispositif de mesure de position selon la revendication 14, **caractérisé en ce que**

- un troisième et un quatrième signal total d'impulsion de référence (REF$_{S3}$, REF$_{S4}$) résultent du premier signal total d'impulsion de référence (REF$_{S1}$), en raison de l'augmentation et de l'affaiblissement,
- un cinquième et un sixième signal total d'impulsion de référence (REF$_{S5}$, REF$_{S6}$) résultent du deuxième signal total d'impulsion de référence (REF$_{S2}$), en raison de l'augmentation et de l'affaiblissement, et
- le signal d'impulsion de référence (REF) résulte de la liaison logique entre le troisième, le quatrième, le cinquième et le sixième signal total d'impulsion de référence (REF$_{S3}$, REF$_{S4}$, REF$_{S5}$, REF$_{S6}$).

**16.** Dispositif de mesure de position selon la revendication 15, **caractérisé en ce que** la liaison logique entre le troisième, le quatrième, le cinquième et le sixième signal total d'impulsion de référence (REF$_{S3}$, REF$_{S4}$, REF$_{S5}$, REF$_{S6}$) résulte dans deux signaux d'aide d'impulsion de référence (REF$_{H1}$, REF$_{H2}$), dont la liaison logique UND résulte dans un signal d'impulsion de référence (REF) sous la forme d'un signal rectangulaire avec une certaine largeur (b$_{REF}$).

**17.** Dispositif de mesure de position selon la revendication 4, **caractérisé en ce que**

- dans la première et la deuxième direction spatiale (RR1, RR2) sont disposés un premier et un deuxième élément de détecteur d'impulsion de référence (24, 25), qui sont connectés de telle manière qu'un premier signal total d'impulsion de référence (REF$_{S1}$) résulte des premier et deuxième signaux partiels d'impulsion de référence (REF$_1$, REF$_2$) appliqués, et
- dans la troisième et la quatrième direction spatiale (RR3, RR4) sont disposés un troisième et un quatrième élément de détecteur d'impulsion de référence (26, 27), qui sont connectés de telle manière qu'un deuxième signal total d'impulsion de référence (REF$_{S2}$) résulte des troisième et quatrième signaux partiels d'impulsion de référence (REF$_3$, REF$_4$) appliqués,
- le signal d'impulsion de référence (REF) résultant du traitement du premier et du deuxième signal total d'impulsion de référence (REF$_{S1}$, REF$_{S2}$).

**18.** Dispositif de mesure de position selon la revendication 17, **caractérisé en ce que** le premier et le deuxième signal total d'impulsion de référence (REF$_{S1}$, REF$_{S2}$) s'appliquent aux entrées d'une unité de comparateur (130), suite à une augmentation, et **en ce que** le signal d'impulsion de référence (REF) résulte à sa sortie.

**19.** Procédé pour le fonctionnement d'un dispositif de mesure de position, en particulier pour la fabrication d'un signal d'impulsion de référence en au moins une position de référence le long d'un trajet de mesure, un premier et un deuxième signal de zone pouvant être déviés à partir d'une piste sur une échelle de mesure, définissant de manière évidente la position relative de l'unité de balayage, déplaçable par rapport à l'échelle de mesure, par rapport à la position de référence, et la position de référence étant définie par la région de transition dans au moins un signal de zone,
**caractérisé en ce que**
la comparaison réalisée entre le premier signal de zone ou d'autres signaux dérivés à partir de celui-ci, et le deuxième signal de zone ou d'autres signaux dérivés de celui-ci, permet de produire un signal d'impulsion de référence (REF).

**20.** Procédé selon la revendication 19, **caractérisé en ce que**

- au moins le premier signal de zone est augmenté et affaibli, si bien que des troisième et quatrième signaux de zone, et
- un signal d'impulsion de référence (REF) est produit à partir de la comparaison entre le premier, le troisième ou le quatrième signal de zone et le deuxième signal de zone ou d'autres signaux de zones dérivés de celui-ci.

**21.** Procédé selon la revendication 20, **caractérisé en ce que** le deuxième signal de zone est augmenté et affaibli, si bien qu'il en résulte un cinquième et un sixième signal de zone, et **en ce qu'**un signal d'impulsion de référence (REF) est produit à partir de la comparaison entre le premier, le troisième ou le quatrième signal de zone et le deuxième, le cinquième ou le sixième signal de zone.

**22.** Procédé selon la revendication 20, **caractérisé en ce que** le premier et le deuxième signal de zone comportent chacun un niveau de signal évident pour chacune des deux zones.

**EP 1 427 985 B1**

**23.** Procédé selon la revendication 20, **caractérisé en ce que** des facteurs d'augmentation et d'affaiblissement définis (A, V) sont sélectionnés pour l'augmentation et l'affaiblissement des signaux de zone.

**24.** Procédé selon la revendication 23, **caractérisé en ce que** le choix des facteurs d'augmentation et d'affaiblissement (A, V) permet de régler la largeur (b) du signal d'impulsion de référence (REF).

**25.** Procédé selon la revendication 19, **caractérisé en ce que** pour la fabrication du signal d'impulsion de référence (REF), un premier signal ($REF_S$) est alimenté vers l'unité de comparateur (130), qui est dérivé à partir de deux signaux de zone ($REF_1$, $REF_2$), et le premier signal ($REF_S$) étant fortement modifié dans la région de la position de référence ($x_{REF}$), et un deuxième signal ($REF_G$) étant en outre alimenté vers l'unité de comparateur (130), qui est également dérivé à partir de deux signaux de zone ($REF_3$, $REF_4$), et le deuxième signal ($REF_G$) comportant essentiellement un niveau de signal constant dans la région de la position de référence ($x_{REF}$).

17

FIG. 1

## FIG. 2

FIG. 3b

FIG. 3a

FIG. 4a

REF $_{S3}$

REF $_{S6}$

REF $_{S2}$

1,0

REF $_{S1}$

REF $_{S5}$

REF $_{S4}$

0,5

0,0

X $_{REF}$

FIG. 4b

1,0

REF $_{H1}$

REF $_{H2}$

0,5

0,0

X $_{REF}$

FIG. 4c

1,0

REF

0,5

b $_{REF}$

0,0

X $_{REF}$

FIG. 5

FIG. 6

FIG. 7

FIG. 8a

REF$_S$

TS2

TS1    X

X$_{REF}$

FIG. 8b

REF$_G$

X

FIG. 8c

REF

X

X$_{REF}$

**EP 1 427 985 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4263506 A
- US 3985448 A
- DE 3536466 A1
- US 4866269 A
- DE 4111873 C2